# EUROPÄISCHE PATENTSCHRIFT

(11) **EP 1 240 705 B1**
(45) Veröffentlichungstag und Bekanntmachung des Hinweises auf die Patenterteilung: **10.09.2008**
(21) Anmeldenummer: 00990730.4
(22) Anmeldetag: 13.12.2000
(51) Int. Cl.: H02K 15/12

(54) **EINRICHTUNG ZUM IMPRÄGNIEREN EINER ISOLATION EINES WICKLUNGSSTABES EINER ELEKTRISCHEN MASCHINE**
DEVICE FOR IMPREGNATING THE INSULATION OF A WINDING ROD OF AN ELECTRICAL MACHINE
DISPOSITIF POUR IMPREGNER L'ISOLATION D'UNE DEMI-BOBINE D'UNE MACHINE ELECTRIQUE

(30) Priorität: 23.12.1999 DE 19962290
(43) Veröffentlichungstag der Anmeldung: 18.09.2002
(60) Teilanmeldung: 08157729.8
(73) Patentinhaber: Alstom Technology Ltd, 5400 Baden (CH)
(72) Erfinder: KLEE, Peter, 69483 Waldmichelbach (DE)
(74) Vertreter: Dimper, Dieter
(86) Internationale Anmeldenummer: PCT/EP2000/012630
(87) Internationale Veröffentlichungsnummer: WO 2001/048898

(56) Entgegenhaltungen:
- DE-A- 3 138 766
- PATENT ABSTRACTS OF JAPAN vol. 6, no. 72 (E-105), 7. Mai 1982 (1982-05-07) -& JP 57 013728 A (TOSHIBA CORP), 23. Januar 1982 (1982-01-23)
- PATENT ABSTRACTS OF JAPAN vol. 18, no. 475 (E-1601), 5. September 1994 (1994-09-05) -& JP 06 153466 A (TOSHIBA CORP), 31. Mai 1994 (1994-05-31)
- PATENT ABSTRACTS OF JAPAN vol. 18, no. 455 (E-1595), 24. August 1994 (1994-08-24) -& JP 06 141521 A (TOSHIBA CORP), 20. Mai 1994 (1994-05-20)
- PATENT ABSTRACTS OF JAPAN vol. 11, no. 55 (E-481), 20. Februar 1987 (1987-02-20) -& JP 61 214750 A (FUJI ELECTRIC CO LTD), 24. September 1986 (1986-09-24)
- PATENT ABSTRACTS OF JAPAN vol. 11, no. 64 (M-565), 26. Februar 1987 (1987-02-26) -& JP 61 220814 A (MITSUBISHI ELECTRIC CORP), 1. Oktober 1986 (1986-10-01)
- SOVIET INVENTIONS ILLUSTRATED Section EI, Week 9442, 7. Dezember 1994 (1994-12-07) Derwent Publications Ltd., London, GB; Class V06, AN 94-339532 XP002166811 -& SU 1 819 367 A (TSIBIZOV VICTOR V ), 30. Mai 1993 (1993-05-30)

## Beschreibung

Die Erfindung betrifft eine Einrichtung zum Imprägnieren einer Isolation eines Wicklungsstabes nach dem Oberbegriff des Anspruch 1.

Eine derartige Einrichtung ist aus der EP 0 831 575 A1 bekannt. Dort ist der Behälter eine Form, in die der Wicklungsstab eingelegt ist. Die mit einem Deckel verschließbare Form ist in einem Evakuierungsbehälter angeordnet, damit bei geöffnetem Deckel ein Vakuum im Behälter aufrecht erhalten werden kann. Der Deckel bleibt während dem Einspeisen des Imprägniermittels geöffnet. Erst nach Erreichen eines vorgebbaren Füllstandes wird der Deckel in Schließstellung gebracht. Ferner erfordert der Evakuierungsbehälter einen großen Platzbedarf. Insgesamt gesehen ergibt sich ein komplizierter Werkzeugaufbau und Prozeßablauf.

Aus den Patent Abstracts of Japan, vol. 6, no. 72 (E-105), 7.Mai 1982 (1982-05-07) - & JP 57 013728 A (TOSHIBA CORP), 23. Januar 1982 (1982-01-23) ist eine Einrichtung zum Imprägnieren einer Isolation eines Wicklungsstabes einer elektrischen Maschine mit den Merkmalen des Oberbegriffes von Patentanspruch 1 bekannt. Der Druck des in den Behälter einfließenden Imprägniermittels ist größer als der in der druckführenden Hülle herrschende Druck. Dadurch dehnt sich der Behälter zuerst unter dem Druck des Imprägniermittels nach außen. Mit Hilfe von Ventilen wird der Druckunterschied zwischen dem Behälter und der Hülle derart geregelt, dass das Imprägniermittel zuerst in den Behälter einfließt und danach aus dem Behälter ausfließt.

Es stellt sich die Aufgabe eine Einrichtung der eingangs genannten Art anzugeben, die mit weniger Aufwand eine schnellere Durchdringung der Isolation mit Imprägniermittel bringt.

Gelöst wird diese Aufgabe erfindungsgemäß durch die Merkmale des Patentanspruchs 1.

Danach ist der Behälter eine vakuum-und druckdichte flexible Hülle, die den Wicklungsstab vollständig umgibt. Die vakuumdichte Hülle ist von einer druckfesten Hülle umfaßt, wobei der Raum zwischen den beiden Hüllen mit einem vorgebbaren Druck beaufschlagt ist. Mit Hilfe einer mit dem Innenraum der vakuumdichten Hülle verbundenen Leitung wird in dieser ersten Hülle ein Unterdruck erzeugt. Der Druck des in die erste Hülle einfließenden Isoliermittels ist kleiner als der in der druckfesten Hülle herrschenden Druck.

Durch den geschlossenen Behälter kann der unmittelbar angeschlossene Vakuumbildner schneller das erforderliche Vakuum erzeugen. Neben einem geschlossenen emissionsfreien Prozeß werden kurze Imprägnierzeiten erzielt. Der Differenzdruck zwischen dem Innenraum des Behälters und dem Innenraum der druckfesten Hülle dient zum Pressen und Verdichten der imprägnierten Isolation.

Weitere Ausgestaltungen der erfindungsgemäßen Lösung sind in den Unteransprüchen angegeben.

Anhand von Ausführungsbeispielen und der schematischen Zeichnungen Fig. 1 bis 6 wird die erfindungsgemäße Einrichtung beschrieben.

Dabei zeigt:
- Fig. 1: eine Seitenansicht eines Wicklungsstabes mit den Anschlüssen für Vakuumbildung und Imprägniermittel,
- Fig. 2: ein Schnitt entlang der Linie II-II der Fig. 1,
- Fig. 3: einen Querschnitt durch eine Einrichtung zur Imprägnierung mehrerer Wicklungsstäbe,
- Fig. 4: einen Querschnitt durch eine andere Ausbildung,
- Fig. 5: einen Querschnitt durch einen Wicklungsstab mit Werkzeug
- Fig. 6: einen Querschnitt durch ein Mehrfachwerkzeug.

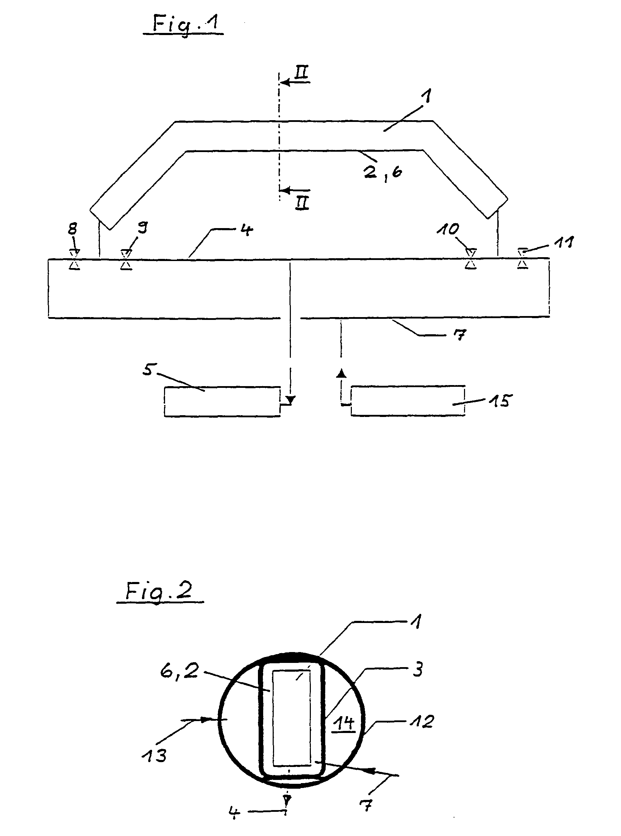

Die Fig. 1 und 2 zeigen einen Wicklungsstab 1 einer Statorwicklung einer nicht dargestellten elektrischen Maschine. Durch Umwicklung mit einem Isolierband entsteht eine Isolation 2. Mit einer als Schlauch oder Schrumpfschlauch ausgebildeten flexiblen Hülle 3 aus vakuum-und druckdichtem Material ist der Wicklungsstab 1 über seine ganze Länge überzogen. Eine Leitung 4 verbindet eine vakuumbildende Anlage 5 mit dem Innenraum 6 der flexiblen Hülle 3, wobei der Innenraum im wesentlichen mit dem Raum gleichzusetzen ist, den die Isolation 2 einnimmt. Eine Zufuhrleitung 7 für als Imprägniermittel verwendetes Harz verbindet einen Tank 15 zur Aufnahme des Harzes mit dem besagten Innenraum 6. In der Leitung 4 und in der Zufuhrleitung 7 sind jeweils 2 Ventile 8, 9 und 10, 11 angeordnet. Eine druckfeste Hülle 12 umfaßt die vakuum-und druckdichte Hülle 3, die von der Leitung 4 und der Zufuhrleitung 7 durchsetzt ist. Ein Druckübertragungsmedium, wie zum Beispiel Preßluft, gelangt über eine Druckleitung 13 in den Raum 14 zwischen der vakuum-und druckdichten Hülle 3 sowie der druckfesten Hülle 12.

Zur Vorbereitung des Imprägniervorganges der Isolation 2 erfolgt nach der Evakuierung des Innenraumes 6 der flexiblen Hülle 3 über die Leitung 4 das Aufbringen eines vorgebbaren Druckes im Raum 14 zwischen den beiden Hüllen 3 und 12. Nach dem Schließen der in der Leitung 4 befindlichen Ventile 8, 9 und nach dem Öffnen der in der Zufuhrleitung 7 angeordneten Ventile 10, 11 wird Imprägnierharz aus dem Tank 15 in die Isolation 2 injiziert. Der Einspeisedruck ist dabei stets kleiner als der in der druckführenden Hülle 12 herrschende Druck. Die Differenz zwischen diesen beiden Druckwerten entspricht dem Druck, mit dem die imprägnierte Isolation 2 gepreßt beziehungsweise verdichtet wird. Die Imprägnierung ist beendet, wenn alle Hohlräume der evakuierten Isolation gefüllt sind.

Neben geometrischen Faktoren sind für die technisch interessante Imprägnierzeit die Parameter Imprägnierharzviskosität, sowie Imprägnierdruck entscheidend. Da nur die Harzmenge, die tatsächlich in die Stabisolation eindringt, am Prozeß beteiligt ist, braucht keine Rücksicht auf die Harzstabilität genommen zu werden. Das bedeutet, daß die Imprägniertemperatur wesentlich höher (bis zirka 120 Grad Celsius) liegen kann als bei der bekannten Tauchtechnik, bei der in einer Imprägnierwanne eine große Menge Harz vorgehalten werden muß. Diese hohe Imprägniertemperatur bewirkt eine extrem niedrige Anfangsviskosität des Harzes und damit einen sehr schnellen Imprägniervorgang. Des weiteren kann der Imprägnierdruck ebenfalls relativ hoch (zirka 10 bar) gewählt werden, so daß auch von daher eine wesentlich schnellere Imprägnierung erfolgen kann. Damit wird die Zeitdauer des Imprägnierprozesses erheblich reduziert.

Bei Verwendung von warm-beziehungsweise heißhärtenden Imprägnierharzen ist eine Erwärmung des Stabes beziehungsweise der Stabisolation erforderlich. Hierzu kann die direkte Heizung des Wicklungsstabes und damit der imprägnierten Wicklungsstabisolation mittels Strom gewählt werden. Werden bei Raumtemperatur gehärtete Harze gewählt, kann ein Isolierband eingesetzt werden, das die dafür geeigneten beschleunigend wirkenden Additive enthält.

Während des Imprägnierprozesses wird der Überdruck in der druckfesten Hülle 12 bis zur Gelierung und Härtung des Imprägnierharzes aufrecht erhalten. Die druckfeste Hülle 12 kann beispielsweise aus einem flexiblen gewebeverstärktem Schlauch oder aus angepaßten segmentierten beziehungsweise verflanschten Druckrohren bestehen. Nach Abschluß des Imprägniervorganges wird bei geschlossenen Ventilen 8, 9, 10, 11 und nach Aufhebung des Überdruckes in der Hülle 12 diese Hülle entfernt und der Wicklungsstab 1 zusammen mit der Hülle 3 entnommen. Nach dem auch die Hülle 3 entfernt ist, kommt der Wicklungsstab zu seinem bestimmungsgemäßen Einsatz.

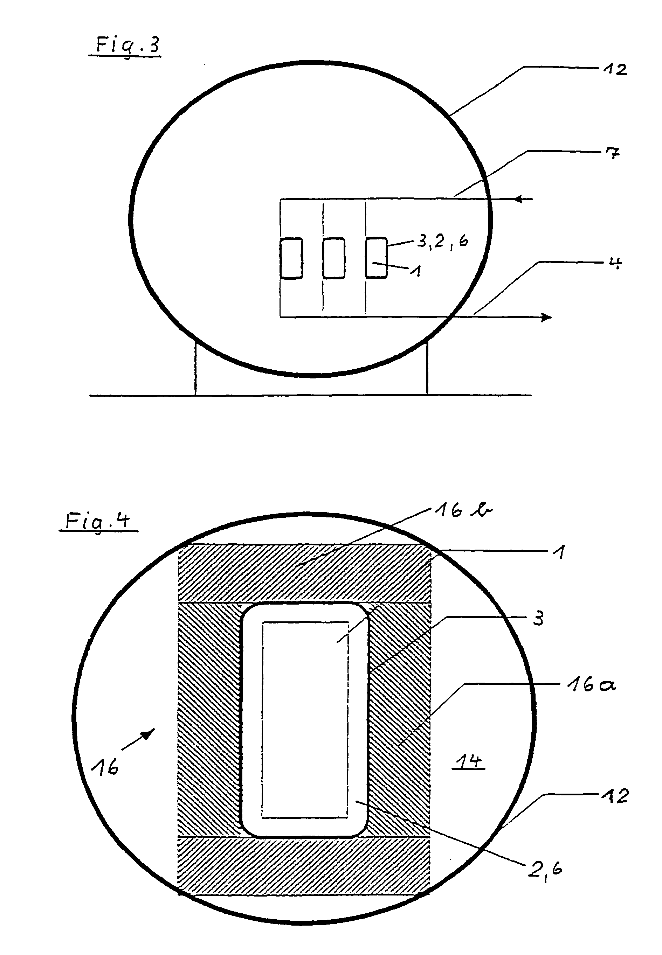

Die Fig. 3 zeigt ein Ausführungsbeispiel, bei dem drei Wicklungsstäbe 1 gleichzeitig imprägniert werden. Von der Leitung 4 zweigen dabei mehrere Stichleitungen ab, so daß alle Wicklungsstäbe 1 gleichzeitig evakuiert werden können. Auch von der Zufuhrleitung 7 führt das Harz zweigend in drei Stichleitungen ab, um eine gleichzeitige Harzeinleitung zu ermöglichen. Als druckfeste Hülle 12 ist bei diesem Ausführungsbeispiel ein Autoklav eingesetzt.

Bei in einem Stator einzusetzenden Wicklungsstäben 1 ist für den sogenannten Nutteil des Wicklungsstabes in der Regel eine hohe mechanische Querschnittsgenauigkeit erforderlich. Fig. 4 zeigt einen Querschnitt durch den Nutteil des Wicklungsstabes 1 mit einem formschlüssig die Hülle 3 umfassenden Kalibrierkörper 16, der im Raum 14 zwischen den Hüllen 3 und 12 angeordnet ist. Der Kalibrierkörper 16 ist aus einzelnen Formstücken 16 a, 16 b zusammengesetzt und gewährleistet die Passgenauigkeit des Nutteils.

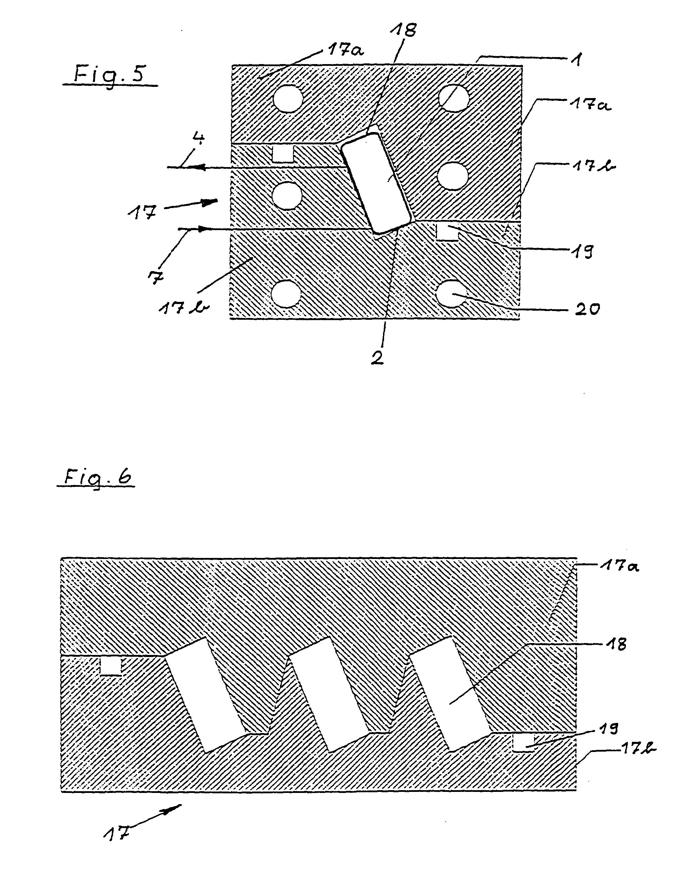

Gemäß Fig. 5 ist ein Werkzeug 17 vorgesehen, das in einem Werkzeugnest 18 den mit der Isolation 2 versehenen Wicklungsstab 1 formschlüssig aufnimmt. Das Werkzeug 17 besteht aus einem Oberteil 17 a und einem Unterteil 17 b, die unter Zwischenschaltung einer umlaufenden Dichtung 19 durch eine nicht dargestellte Schraubverbindung kraftschlüssig miteinander verbunden sind. Die durch das Werkzeugnest 18 gebildete Kammer umschließt die Isolation 2 des Wicklungsstabes 1 unter Einhaltung eines vorgebbaren Spiels. Nach erfolgter Evakuierung der Kammer mit Hilfe der Leitung 4 wird über die Zufuhrleitung 7 das Imprägnierharz eingespeist, bis die Isolation und deren Hohlräume imprägniert sind. In Kanälen 20 sind Heiz- oder Kühlsysteme zur Unterstützung des Imprägnier-oder Aushärtevorganges angeordnet. Das Werkzeug 17 ist während dem Evakuieren und während dem Befüllen mit Imprägnierharz vollständig geschlossen, so daß der Austritt von Emissionen vermieden wird.

Die Fig. 6 zeigt ein Werkzeug 17 mit mehreren Werkzeugnestern 18, so daß eine entsprechende Anzahl von nicht dargestellten Wicklungsstäben gleichzeitig evakuiert und imprägniert werden können. Ober-und Unterteil 17 a, 17 b sind auch hier unter Zwischenschaltung einer umlaufenden Dichtung 19 kraftschlüssig miteinander verbunden.

## Patentansprüche

1. Einrichtung zum Imprägnieren einer Isolation (2) eines Wicklungsstabes (1) einer elektrischen Maschine, mit einem den Wicklungsstab aufnehmenden Behälter, der mit einem ein Imprägniermittel enthaltenden Tank (15) verbunden ist, wobei der Innenraum des Behälters mit einem Vakuum belegbar ist und wobei das Imprägniermittel mit einem vorgebbaren Druck in den Behälter einfliesst, wobei der Behälter eine vakuum- und druckdichte, flexible Hülle (3) ist, die den Wicklungsstab (1) vollständig umgibt, der Behälter von einer druckfesten Hülle (12) umfasst ist, und der Raum zwischen den beiden Hüllen (3, 12) mit vorgebbarem Druck beaufschlagt ist, wobei mit dem Innenraum des Behälters eine Leitung (4) einer vakuumbildenden Anlage (5) verbunden ist,
**dadurch gekennzeichnet, dass**
der Druck des in den Behälter einfliessenden Imprägniermittels kleiner ist als der in der druckführenden Hülle (12) herrschende Druck.

2. Einrichtung nach Anspruch 1, **dadurch gekennzeichnet, dass** die vakuum- und druckdichte Hülle (3) ein thermoschrumpfender Schlauch ist.

3. Einrichtung nach Anspruch 1, **dadurch gekennzeichnet, dass** die vakuum- und druckdichten Hülle (3) ein elastischer Schlauch ist.

4. Einrichtung nach Anspruch 1, **dadurch gekennzeichnet, dass** ein Teilbereich der vakuum-und druckdichten Hülle (3) durch einen formschlüssig den Wicklungsstab (1) umfassenden Kalibrierkörper (16) umfasst ist.

5. Einrichtung nach Anspruch 1, **dadurch gekennzeichnet, dass** als druckfeste Hülle (12) ein flexibler, gewebeverstärkter oder metallischer Schlauch eingesetzt ist.

6. Einrichtung nach Anspruch 1, **dadurch gekennzeichnet, dass** die druckfeste Hülle (12) aus metallischen oder nichtmetallischen segmentierten beziehungsweise verflanschten Druckrohren besteht.

7. Einrichtung nach Anspruch 1, **dadurch gekennzeichnet, dass** ein Teil der Druckrohre durch einen gewebeverstärkten oder metallischen Schlauch ersetzt ist.

8. Einrichtung nach Anspruch 1, **dadurch gekennzeichnet, dass** der Wicklungsstab (1) als Stromheizung ausgelegt ist, wobei der Widerstand des Stabes ein Mass für dessen Temperatur darstellt.

9. Einrichtung nach Anspruch 1, **dadurch gekennzeichnet, dass** der während des Imprägniervorganges herrschende Überdruck in der Hülle (12) bis zur Gelierung und Härtung des Imprägniermittels aufrecht erhalten wird.

10. Einrichtung nach Anspruch 1, **dadurch gekennzeichnet, dass** bei Raumtemperatur härtende Harze als Imprägniermittel verwendet sind.

11. Einrichtung nach Anspruch 1, **dadurch gekennzeichnet, dass** als Isolation Isolierbänder verwendet werden, die beschleunigend wirkende Additive enthalten.

## Claims

1. Device for impregnation of the insulation (2) of a winding bar (1) of an electrical machine, having a container which holds the winding bar and is connected to a tank (15) which contains impregnation means, in which case a vacuum can be applied to the interior of the container and the impregnation means flows into the container at a predeterminable pressure, with the container being a vacuum-tight and pressure-tight flexible casing (3) which completely surrounds the winding bar (1), with the container being surrounded by a pressure-resistant casing (12), and with a predeterminable pressure being applied to the space between the two casings (3, 12), with the interior of the container being connected to a line (4) from a vacuum-forming installation (5),
**characterized in that**
the pressure of the impregnation means flowing into the container is less than the pressure in the pressure-resistant casing (12).

2. Device according to Claim 1, **characterized in that** the vacuum-tight and pressure-tight casing (3) is a sleeve which can be shrunk by heat.

3. Device according to Claim 1, **characterized in that** the vacuum-tight and pressure-tight casing (3) is an elastic sleeve.

4. Device according to Claim 1, **characterized in that** a subarea of the vacuum-tight and pressure-tight casing (3) is surrounded by a calibration body (16), which surrounds the shape of the winding bar (1).

5. Device according to Claim 1, **characterized in that** a flexible, fabric-reinforced or metallic sleeve is used as the pressure-resistant casing (12).

6. Device according to Claim 1, **characterized in that** the pressure-resistant casing (12) is composed of metallic or non-metallic segmented or flange-connected pressure tubes.

7. Device according to Claim 1, **characterized in that** a portion of the pressure tube is replaced by a fabric-reinforced or metallic sleeve.

8. Device according to Claim 1, **characterized in that** the winding bar (1) is in the form of an electrical heater, with the resistance of the bar representing a measure of its temperature.

9. Device according to Claim 1, **characterized in that** the increased pressure in the casing (12) during the impregnation process is maintained until the impregnation means has gelled and cured.

10. Device according to Claim 1, **characterized in that** resins which cure at room temperature are used as impregnation means.

11. Device according to Claim 1, **characterized in that** insulating strips which contain additives with an accelerating effect are used as insulation.

## Revendications

1. Dispositif pour imprégner l'isolation (2) d'une demi-bobine (1) d'une machine électrique, comprenant un corps recevant la demi-bobine qui est connecté à un récipient (15) contenant un agent d'imprégnation, l'espace interne du corps pouvant être sollicité par du vide et l'agent d'imprégnation affluant avec une pression prédéfinissable dans le corps, le corps étant une enveloppe flexible (3) étanche au vide et à la pression, qui entoure complètement la demi-bobine (1), le corps étant entouré par une enveloppe (12) résistant à la pression, et l'espace entre les deux enveloppes (3, 12) étant sollicité par une pression prédéfinissable, une conduite (4) d'une installation (5) de génération de vide étant connectée à l'espace interne du corps,
**caractérisé en ce que**
la pression de l'agent d'imprégnation affluant dans le corps est inférieure à la pression régnant dans l'enveloppe (12) résistant à la pression.

2. Dispositif selon la revendication 1, **caractérisé en ce que** l'enveloppe (3) étanche au vide et à la pression est un tuyau flexible thermorétractable.

3. Dispositif selon la revendication 1, **caractérisé en ce que** l'enveloppe (3) étanche au vide et à la pression est un tuyau élastique.

4. Dispositif selon la revendication 1, **caractérisé en ce qu'**une région partielle de l'enveloppe (3) étanche au vide et à la pression est entourée par un corps de calibrage (16) entourant la demi-bobine (1) par engagement positif.

5. Dispositif selon la revendication 1, **caractérisé en ce que** l'on utilise comme enveloppe (12) résistant à la pression un tuyau flexible métallique ou renforcé par un tissu.

6. Dispositif selon la revendication 1, **caractérisé en ce que** l'enveloppe (12) résistant à la pression se compose de tubes de pression segmentés ou bridés métalliques ou non métalliques.

7. Dispositif selon la revendication 1, **caractérisé en ce qu'**une partie des tubes de pression est remplacée par un tuyau flexible métallique ou renforcé par un tissu.

8. Dispositif selon la revendication 1, **caractérisé en ce que** la demi-bobine (1) est conçue sous forme de chauffage électrique, la résistance de la demi-bobine représentant une mesure de sa température.

9. Dispositif selon la revendication 1, **caractérisé en ce que** la surpression régnant pendant l'opération d'imprégnation est maintenue dans l'enveloppe (12) jusqu'à ce que l'agent d'imprégnation se gélifie et durcisse.

10. Dispositif selon la revendication 1, **caractérisé en ce que** l'on utilise comme agent d'imprégnation des résines durcissant à la température ambiante.

11. Dispositif selon la revendication 1, **caractérisé en ce que** l'on utilise comme isolation des bandes isolantes qui contiennent des additifs à effet accélérateur.
